# EUROPÄISCHE PATENTSCHRIFT

(11) **EP 2 739 455 B1**
(45) Veröffentlichungstag und Bekanntmachung des Hinweises auf die Patenterteilung: **04.07.2018**
(21) Anmeldenummer: 12742899.3
(22) Anmeldetag: 01.08.2012
(51) Int. Cl.: B29C 65/50, B65D 88/16, B65B 51/14, B65D 75/40, B65D 90/02, B65D 90/08, B65B 1/02, B65B 43/30, B31B 70/60

(54) **VERFAHREN UND VORRICHTUNG ZUM HERSTELLEN, BEFÜLLEN UND VERSCHLIESSEN VON SÄCKEN SOWIE EIN SACK**
METHOD AND DEVICE FOR PRODUCING, FILLING, AND CLOSING BAGS, AND A BAG
PROCÉDÉ ET DISPOSITIF POUR FABRIQUER, REMPLIR ET FERMER DES SACS AINSI QU'UN SAC

(30) Priorität: 04.08.2011 DE 102011080462
(43) Veröffentlichungstag der Anmeldung: 11.06.2014
(73) Patentinhaber: Windmöller & Hölscher KG, 49525 Lengerich (DE)
(72) Erfinder: KÖHN, Uwe, 49078 Osnabrück (DE); GROSSE-HEITMEYER, Rüdiger, 49492 Westerkappeln (DE); VOSS, Hans-Ludwig, 49545 Tecklenburg (DE); WOCKENFUSS, Gerd, 49525 Lengerich (DE); HAWIGHORST, Thomas, 49205 Hasbergen (DE)
(86) Internationale Anmeldenummer: PCT/EP2012/065031
(87) Internationale Veröffentlichungsnummer: WO 2013/017620

(56) Entgegenhaltungen:
- EP-A2- 1 167 220
- US-A- 2 220 874

## Beschreibung

Die Erfindung betrifft ein Verfahren zum Herstellen, Befüllen und Verschließen von Säcken nach dem Oberbegriff des Anspruchs 1, sowie Vorrichtungen nach den Oberbegriffen der Ansprüche 10 und 15 sowie einen Sack nach dem Oberbegriff des Anspruchs 16.

Ein solches eingangs genanntes Verfahren wird oft als "Form-, Fill- und Seal"-Verfahren (FFS-Verfahren) bezeichnet. Die Festigkeit von nach einem solchen Verfahren herstellten Säcken, den FFS-Säcken, wird maßgeblich durch deren Quernähte, mit denen die Säcke verschlossen werden, bestimmt. Die Materialeigenschaften und die Materialstärken sind bei diesen FFS-Säcken so ausgelegt, dass eine ausreichend haltbare Quernaht herstellbar ist. Eine Quernaht wird in der Regel durch Schweißen erzeugt, wobei mit Schweißbacken von den Außenseiten her Wärme und ein Anpressdruck in das Sackmaterial eingetragen wird.

Ein FFS-Verfahren läuft in der Regel wie folgt ab. Zunächst wird eine auf einen Wickel aufgewickelte Schlauchbahn zur Verfügung gestellt. Auf die Herstellung der Schlauchbahn wird weiter unten näher eingegangen, weil hier wesentliche Merkmale der Erfindung eine Rolle spielen. Das vorauslaufende Ende der Schlauchbahn wird durch eine Querfügung, oft die oben angesprochene Quernaht, mit einer Bodennaht versehen. Sodann wird der Schlauch um eine Länge des späteren Sackes vorgeschoben. Anschließend wird ein Schlauchstück durch eine Quertrennung, meist durch ein Glattschnittmesser, vom Schlauch abgeschnitten. Das neu entstandene voraus laufende Ende der Schlauchbahn wird - meist zusammen mit dem Arbeitsschritt des Quertrennens - wiederum mit einer Querfügung versehen. Querfügungen können jedoch, genauso wie Längsfügungen und Diagonalfügungen, bereits stromaufwärts erfolgen, also an Schlauchbahnabschnitten, die im nächsten Arbeitstakt noch nicht zu einem Schlauchstück vereinzelt werden.

Das entstandene Schlauchstück wird durch die verbliebene Öffnung befüllt. In einigen FFS-Maschinen wird das Schlauchstück bereits vor seiner Trennung von der Schlauchbahn von Greifelementen ergriffen und nach der Abtrennung zu einer Füllstation befördert. Nach der Befüllung des betreffenden Schlauchstücks werden die verbliebenen Öffnungen der Säcke durch eine zweite Querfügung mit einer Kopfnaht versehen. Der Sack ist damit verschlossen und kann abtransportiert werden. Es kann vorgesehen sein, mittels weiterer Greifelemente die befüllten Säcke von der Füllstation zu einer davon separierten Schließstation zu transportieren. Bei schwereren Säcken kann auch ein die Säcke unterstützendes Förderband vorgesehen sein.

Zur Herstellung der beschriebenen Schläuche werden Schlauchbildungseinrichtungen, beispielsweise Schlauchmaschinen, genutzt. Dabei wird ein Flachbahnmaterial, vorzugsweise kontinuierlich, vorgezogen und die Ränder nach innen eingeschlagen, so dass sich diese überlappen. Der Überlappungsbereich wird gefügt, beispielsweise mit einem Extrudat beaufschlagt und anschließend verpresst. Der so entstandene Schlauch weist nun eine Längsnaht auf und wird oft auf einen Wickel aufgewickelt, kann aber auch direkt weiterverarbeitet werden. Bei Bedarf können bei der Schlauchbildung auch Seitenfalten eingelegt werden.

Die beschriebenen FFS-Maschinen stellen in hoher Geschwindigkeit befüllte und verschlossene Säcke her. Rationalisierungsmöglichkeiten bestehen hauptsächlich bei den Säcken an sich. In jüngster Zeit sind daher Ansätze entstanden, das Material, aus dem die Schlauchbahnen und die Säcke bestehen, zu optimieren, beispielsweise bezüglich des Materialbedarfs, der Reißfestigkeit, der Durchstoßfestigkeit oder der Luftdurchlässigkeit. Letztendlich führen solche Ansätze aber zu einem technischen Kompromiss hinsichtlich aller erreichbaren Eigenschaften.

In der Druckschrift WO 2009/033196 ist ein Gewebe offenbart worden, welches mit einer Beschichtung versehen ist. Das Gewebe besteht dabei aus monoaxial verstreckten Kunststoffbändchen. Es ist bekannt, dass mit einem solchen Gewebe im Vergleich zu Kunststofffolien bei gleicher Festigkeit Material eingespart werden kann. Da die Festigkeit des Gewebes bei Schweißprozessen verloren geht, wird vorgeschlagen, das Gewebematerial vollflächig mit einer Beschichtung zu versehen. Die Schmelztemperatur der Beschichtung soll dabei niedriger als die Kristallisationstemperatur des Gewebes sein, so dass bei einem Schweißprozess nur die Beschichtung, nicht aber das Gewebe angeschmolzen wird. Die Festigkeit des Gewebes soll so erhalten bleiben, die erzeugten Verbindungen aber haltbar sein. Die Beschichtung erfordert jedoch einen hohen Materialeinsatz, so dass die durch die Verwendung des Gewebes erzielte Einsparung mehr als aufgezehrt sein dürfte.

Die Druckschriften US 2 220 874 A und EP 1 167 220 A2 offenbaren Beutel beziehungsweise Säcke, bei denen Teilbereiche mit Klebstoffschichten versehen sind. Diese Klebstoffschichten sind Beschichtungen, jedoch reicht eine Verklebung in vielen Fällen bei der Herstellung von FFS-Säcken hinsichtlich der Festigkeit nicht aus.

Die Aufgabe der vorliegenden Erfindung ist es daher, ein Verfahren vorzuschlagen, welches zu einer signifikanten Materialeinsparung ohne Abstriche bei der Festigkeit der gefertigten Säcke hinnehmen zu müssen.

Erfindungsgemäß wird diese Aufgabe durch Hinzufügung der Merkmale des kennzeichnenden Teils des Anspruchs 1 gelöst. Demnach ist vorgesehen, dass dem Flachbahnmaterial, aus dem der Schlauch gebildet wird, vor der Bildung der Säcke zumindest eine weitere Materialkomponente beigefügt wird und dass. die Beifügung der zumindest zweiten Komponenten des Flachbahnmaterials in Richtung der Schlauchachse nicht vollflächig erfolgt, so dass sich die Beschaffenheit des aus dem Flachbahnmaterial gebildeten Schlauchmaterials in der Richtung der Schlauchachse zumindest in Teilbereichen der Schlauchbreite ändert, wobei die zumindest eine weitere Materialkomponente in Form von Zetteln dem Flachbahnmaterialbeigefügt wird, wobei die Zettel am oberen und unteren Ende des Sacks auf der Innenoberfläche befestigt werden. Die Begriffe "Flachbahnmaterial" und "erste Materialkomponente" werden in dieser Patentanmeldung synonym verwendet.

Vor der Bildung der Säcke, insbesondere vor der Bildung einer Schlauchbahn aus einer Flachbahn, werden also eine oder mehrere Materialkomponenten dem Schlauchmaterial beigefügt. Bei dieser Erfindung wird somit unterschieden zwischen dem Ausgangsmaterial mit einer ersten Materialkomponente und zumindest einer beigefügte Komponente. Diese erste Materialkomponente kann jedoch bereits mehrschichtig sein. Denkbar ist beispielsweise ein Gewebe aus gereckten Kunststoffbändchen, dass mit einer vollflächigen Kunststoffbeschichtung versehen worden ist, um etwa das spätere Transportgut vor Feuchtigkeit zu schützen.

Der maßgebliche Gedanke der Erfindung ist damit nun, dass die zumindest eine weitere Materialkomponente nicht vollflächig aufgebracht wird. Erfindungsgemäß kann die Beschaffenheit des Schlauchmaterials, nachdem die weitere Materialkomponente beigefügt wurde, zumindest in Teilbereichen der Schlauchbreite variieren, wenn man gedanklich die Längsachse der Schlauchbahn abschreitet.

Der einfachste Fall ist dabei, dass in Längsrichtung gesehen sich in Abschnitten die weitere Materialkomponente über die gesamte Breite der Schlauchbahn erstreckt und in weiteren Abschnitten die Erstreckung in Richtung quer zur Längsrichtung null ist, also keine weitere Materialkomponente beigefügt wird. Dieses ist besonders vorteilhaft, wenn die weitere Materialkomponente in den Bereichen in der Schlauchbahn vorliegt, in denen die Querfügungen vorgenommen werden, wenn die weitere Komponente dazu vorgesehen ist, die Querfügungen zu verbessern, beispielsweise haltbarer zu machen.

Auf diese Weise können Boden- und Kopfnaht verbessert werden, ohne unnötig viel der weiteren Materialkomponente einzusetzen. Der Einsatz der weiteren Materialkomponente erstreckt sich also im Wesentlichen auf die für die Nähte notwendigen Bereiche.

Ein weiteres Beispiel ist, dass etwa im Bereich der späteren Querfügungen die weitere Materialkomponente beigefügt wird, und in den Zwischenbereichen die weitere Materialkomponente so aufgebracht wird, dass schmale Längsstreifen entstehen. Diese Längsstreifen könnten später ebenfalls gefügt werden, beispielsweise verschweißt werden, um bei einem Seitenfaltensack die Längsnähte zu stabilisieren.

Viele weitere, hier nicht erwähnte Konfigurationen sind denkbar, die allesamt von dem erfinderischen Gedanken erfasst werden.

In einer ersten vorteilhaften Weiterbildung der Erfindung wird die Zusammenführung der zumindest zwei Komponenten des Schlauchmaterials vorgenommen, indem auf die erste Materialkomponente eine Schicht aus Extrudat, insbesondere aus verflüssigtem Polymer, oder aus Flüssigkleber aufgebracht wird. Diese Vorgehensweise ist besonders einfach, da die Handhabung von Flüssigkeiten gut beherrscht wird. Flüssigkeiten können insbesondere aufgespritzt werden, so dass keine oder kaum sich bewegende Bauteile benötigt werden.

Vorteilhaft ist dabei, wenn die Dicke der Schicht aus Extrudat oder Flüssigkleber, die der ersten Materialkomponente beigefügt wird, zumindest in Teilbereichen der Schlauchbreite in Richtung der Schlauchachse variiert wird. Dort, wo spätere Verbindungen stark beansprucht werden, kann die Schicht dicker aufgetragen werden, so dass die Haltbarkeit verbessert wird. In anderen Bereichen kann dagegen Material eingespart werden.

Erfindungsgemäß ist vorgesehen, eine weitere Materialschicht in Form von Zetteln dem Flachbahnmaterial beizufügen. Diese Zettel können auf das Flachbahnmaterial beispielsweise an Stellen aufgebracht werden, an denen später die Querfügungen des Sacks angebracht werden sollen. Mit dieser Weiterbildung der Erfindung wird besonders viel Material eingespart, da die Zettel die lediglich eine Breite aufweisen müssen, die gleich oder nur geringfügig größer als der spätere Verwendungsbereich ist. In Richtung der Schlauchbahn- beziehungsweise Schlauchstück- oder Sacklängsachse gesehen, können die Zettel kurz sein. In der Regel ist die Länge der Zettel also wesentlich kleiner als ihre Breite. Die Zettel können mit einem Extrudat oder einem Klebstoff auf das Flachbahnmaterial aufgebracht werden. Das Extrudat oder der Klebstoff würden dann eine zweite Materialkomponente bilden. Den Zettel könnte man dann folglich als dritte Materialkomponente bezeichnen. Ein Zettel kann allerdings auf die erste Materialkomponente auch direkt aufgebracht und an dieser befestigt, beispielsweise aufgeschweißt oder aufgesiegelt, werden. In diesem Fall würde man bei dem Zettel von der zweiten Materialkomponente sprechen.

In einer weiteren vorteilhaften Ausführungsform der Erfindung ist vorgesehen, eine weitere Materialschicht in Form von einer zumindest teilweise unterbrochenen Bahn dem Flachbahnmaterial beizufügen. Das Zusammenführen zweier Bahnen ist technisch besonders einfach, so dass eine mechanisch unkomplizierte und damit preisgünstige Vorrichtung zur Durchführung des Verfahrens genügt.

Vorteilhaft ist es auch, wenn eine weitere Materialkomponente mit der ersten Materialkomponente nicht über die ganze Länge und/oder Breite der zweiten Materialkomponente verbunden wird. Dieser Ausführungsform der Gedanke zugrunde, dass es ausreichend sein kann, die weitere Materialkomponente, etwa einen Zettel, nur bereichsweise, beispielsweise punktuell oder entlang einer Linie, mit der ersten Materialkomponente zu verbinden. Beispielsweise kann so Extrudat oder Klebstoff (bei einer Verklebung beider Materialkomponenten) oder Wärme und damit Energie (bei einer Verschweißung beider Materialkomponenten) eingespart werden. Eine zweckmäßige Ausführung ist dabei, wenn die zweite Materialkomponente über ihre Breite vollständig mit der ersten Materialkomponente verbunden wird (wobei mit "Breite" die Richtung quer zur Längsachse der Schlauchbahn gemeint ist), aber in Richtung der Längsachse der Schlauchbahn nur bereichsweise mit der ersten Materialkomponente verbunden wird.

In einer weiteren Ausgestaltung der Erfindung ist es vorgesehen, dass zumindest eine der beiden Quertrennungen, die der Bildung der Schlauchstücke zu Grunde liegen, entlang einer Linie durchgeführt wird, in deren Bereich die zweite Materialkomponente nicht über ihre gesamte Breite und/oder Länge mit dem Schlauchmaterial verbunden ist. Dies bedeutet, dass direkt entlang der Quertrennung die zweite Materialkomponente, insbesondere dann, wenn dies Zettel sind, nicht mit der ersten Materialkomponente verbunden ist. Unabhängig hiervon ist es vorteilhaft, wenn sich ein einzelner Zettel über die spätere Quertrennung hinweg fortsetzt. Dieser Zettel wird damit auf einen Bereich aufgebracht, der später zum Teil zu einem Schlauchstück gehört, zum anderen Teil aber zum darauf folgenden Schlauchstück. Der Zettel kann zu gleichen Anteilen auf den beiden späteren Schlauchstücken aufgebracht sein. In Längsrichtung betrachtet kann der Zettel dann in seinem Anfangsbereich und in seinem Endbereich mit dem Flachbahnmaterial verbunden werden.

Weiterhin ist vorgesehen, dass zumindest eine der beiden Querfügungen des Schlauches, die zur Bildung und zur Schließung der Schlauchstücke notwendig sind, in Bereichen durchgeführt wird, in denen die zweite Materialkomponente nicht über die gesamte Breite und/oder Länge mit dem Schlauchmaterial verbunden ist. Die Querfügungen werden also vorzugsweise in Bereichen durchgeführt, in denen die zweite Materialkomponente nicht in dem Schlauchmaterial anhaftet, so dass ein möglichst geringer Wärmeübertrag in das Schlauchmaterial erfolgt. Das eigentliche Schlauchmaterial wird somit bei dem Fügevorgang möglichst wenig in Mitleidenschaft gezogen. Dies ist besonders vorteilhaft, wenn das Schlauchmaterial gerecktes oder gestrecktes Material, insbesondere ein Gewebe aus gereckten Kunststofffasern, umfasst.

Vorteilhaft ist es weiterhin, wenn bei zumindest einer der beiden Querfügungen, die zur Bildung und Schließung des notwendig sind, nicht alle Schichten des Schlauchmaterial einem Fügeprozess zu einer Fügenaht verbunden werden. Auf diese Weise soll verhindert werden, dass beispielsweise das tragende Material des Sacks durch den Fügeprozess beschädigt wird. Dies kann beim Verschweißen dadurch erreicht werden, dass die Schweißtemperatur der zweiten Komponente niedriger ist als die Schweißtemperatur der ersten Komponente. Bei einer Schweißtemperatur, die passend gewählt ist, werden die Lagen der zweiten Komponente miteinander verschweißt. Jedoch werden weder die erste Komponente mit der zweiten Komponente noch die einzelnen Lagen der ersten Komponente miteinander verbunden. Eine Alternative hierzu sind Fügeverfahren, die sich eine Strahlungsabsorption zunutze machen. Es kann beispielsweise Laserlicht eingesetzt werden, das nicht von der ersten, aber von der zweiten Komponente absorbiert wird und hier zu einer Aufheizung des Materials führt, welche für ein Verschweißen genutzt werden kann (zusätzliches Einbringen von Druck). Die Materialien der ersten und der zweiten Komponenten und/oder die Wellenlänge des Laserlichts müssen entsprechend ausgewählt werden. Eine weitere Möglichkeit zum Verbinden der Lagen der zweiten Komponente ist die Verwendung von Ultraschall.

In weiterer Ausgestaltung der Erfindung ist vorgesehen, dass bei zumindest einer der beiden Querfügungen, die zur Bildung und Schließung der Säcke notwendig sind, die zumindest zwei unterschiedlichen Schichten des Schlauchmaterials in zumindest zwei Fügeprozessen verschlossen werden. Mit dem zweiten Fügeprozess können beispielsweise die erste und die zweite Materialkomponente aneinander geheftet werden, so dass die erste Materialkomponente kein offenes Ende bildet, bei welchem das Material umherflattern könnte. Das würde nicht nur unschön aussehen, sondern könnte schnell zu Schmutzansammlungen oder sogar Beschädigungen führen.

In einer weiteren vorteilhaften Ausführungsform ist es vorgesehen, dass das Fügen einer inneren der zumindest zwei unterschiedlichen Schichten durch Fügewerkzeuge vorgenommen wird, die ihre Arbeitsposition innerhalb der Ausdehnung der äußeren Schicht in der Richtung der Schlauchstückachse erreichen. Mit anderen Worten "taucht" das Fügewerkzeug in den Bereich zwischen der ersten und der zweiten Materialkomponente ein, um die beiden Lagen der zweiten Materialkomponente zu fügen, insbesondere miteinander zu verschweißen.

Ein wichtiger Gegenstand der vorliegenden Erfindung ist eine Schlauchmaschine zum Herstellen einer Schlauchbahn, welche in einer Vorrichtung zum Herstellen, Befüllen und Verschließen von Säcken zu eben diesen Säcken verarbeitbar ist. Mindestbestandteile einer solchen Schlauchmaschine ist zumindest eine Abwickeleinrichtung zum Abwickeln zumindest einer Flachbahn, welche eine erste Materialkomponente umfasst, und eine Schlauchbildungseinrichtung zum Bilden einer Schlauchbahn, welche über eine Längsachse verfügt, aus der zumindest einen Flachbahn. In der Regel wird genau eine Flachbahn verwendet, deren Ränder eingeschlagen werden, wie es bereits eingangs beschrieben wurde.

Erfindungsgemäß ist bei der Schlauchmaschine zumindest eine Applikationseinrichtung zum Aufbringen zumindest einer zweiten, schweißbaren Materialkomponente vorgesehen, mit welcher die Aufbringung der zumindest zweiten Komponenten des Schlauchmaterials in Richtung der Längsachse der Schlauchbahn bereichsweise durchführbar ist, so dass sich die Beschaffenheit des Schlauchmaterials in der Richtung der Längsachse des Schlauches zumindest in Teilbereichen des Schlauches ändert, wobei die zweite Materialkomponente Zettel umfasst, wobei die Zettel mittels der Applikationsvorrichtung am oberen und unteren Ende und auf der Innenoberfläche des späteren Sacks befestigbar sind.

Vorteilhaft ist dabei, wenn die Applikationseinrichtung eine Abwickeleinrichtung umfasst, von welcher die auf einem Wickel aufgewickelte, bahnförmige zweite Materialkomponente abwickelbar ist.

In einer besonders bevorzugten Ausführungsform der erfindungsgemäßen Schlauchmaschine ist es vorgesehen, die Applikationseinrichtung eine Trenneinrichtung umfasst, mit welcher die bahnförmige zweite Materialkomponente in einzelne Bahnabschnitte trennbar ist. Auf diese Weise können also beispielsweise einzelne Zettel erzeugt werden, die in bestimmten Abständen auf das Flachbahnmaterial auftragbar sind. Vorzugsweise weisen die Zettel quer zu deren Transporteinrichtung eine Breite auf, die größer ist als deren Länge, also der Abstand zwischen zwei Trennschnitten. Die Trenneinrichtung kann dabei ein Walzenpaar umfassen, wobei eine Walze eine Halteeinrichtung für den abgetrennten Bahnabschnitt umfasst (Transportwalze) und die zweite Walze ein Trennwerkzeug, etwa ein Messer, umfasst. Zum beabstandeten Aufbringen der Zettel auf das Flachbahnmaterial arbeitet die Trenneinrichtung vorzugsweise taktweise, während der Transport des Flachbahnmaterials kontinuierlich erfolgt.

In einer bevorzugten Weiterbildung der Erfindung ist eine Klebstoff-, Beschichtungs- oder Extrudatauftragseinrichtung vorgesehen ist, mit welcher ein Klebstoff, eine Beschichtung oder ein Extrudat auf die erste und/oder auf die zweite Materialkomponente auftragbar ist. Insbesondere im Zusammenhang mit dem taktweisen Vorschub der Zettel kann eine Extrusionseinrichtung zum Auftragen eines Extrudats vorteilhaft eingesetzt werden. Diese Extrusionseinrichtung kann während der Stillstandsphase das Extrudat auf einen Zettel auftragen, in der eine einzelne, quer zur Transportrichtung der Zettel bewegbare Auftragsdüse verwendet werden kann. Somit kann eine günstige Einrichtung geschaffen werden. Bei Weitertransport des Zettels kann die Transportwalze den Zettel mit dem noch ausreichend warmen Extrudat auf das Flachbahnmaterial auftragen und gegebenenfalls andrücken. Anstelle einer quer beweglichen Einzeldüse kann auch eine quer verlaufende Anordnung mehrerer Düsen vorgesehen werden. Auch Klebstoff kann auf die gleichen Arten aufgetragen werden. Für Klebstoff können allerdings auch Klebstoffauftragswalzen oder -stempel verwendet werden. Extrudat oder Klebstoff können auch auf das Flachbahnmaterial aufgetragen werden.

Besonders zweckmäßig ist es, wenn die Schlauchbahn nach ihrer Fertigstellung durch eine Aufwickelvorrichtung aufwickelbar ist, so dass die Produktion der Schlauchbahn und der späteren Herstellung der befüllten Säcke unabhängig voneinander, insbesondere mit unterschiedlichen Geschwindigkeiten, erfolgen kann.

Gegenstand der vorliegenden Erfindung ist weiterhin ein System zum Herstellen, Befüllen und Verschließen von Säcken, wobei dieses System eine zuvor beschriebene, erfindungsgemäße Schlauchmaschine umfasst.

Schließlich gehört auch ein Sack zum Erfindungsgegenstand, wobei der Sack eine erste Materialkomponente, eine Längsachse und zumindest eine Schließnaht umfasst. Die zumindest eine Schließnaht verläuft im Wesentlichen quer zur Längsachse und verschließt den Sack an zumindest einem seiner Enden. Der erfindungsgemäße Sack zeichnet sich dadurch aus, dass zumindest eine zweite Materialkomponente im Sackinneren vorgesehen ist, wobei die zumindest eine zweite Materialkomponente in Richtung der Längsachse des Sacks derart variiert ist, dass die Beschaffenheit des Schlauchmaterials in der Richtung der Längsachse zumindest in Teilbereichen der Sackbreite geändert ist, wobei die zumindest eine weitere Materialkomponente in Form von Zetteln vorgesehen sind, wobei die Zettel am oberen und unteren Ende des Sacks auf der Innenoberfläche befestigt sind.

Vorteilhaft ist dabei besonders, wenn die zweite Komponente zumindest ein Materialstück, insbesondere einen Zettel, umfasst, auf welchem die Schließnaht verläuft. Damit ist eine Funktionstrennung herbeigeführt worden. Während die erste Komponente optimiert werden kann, mit möglichst geringem Materialeinsatz eine ausreichende Tragfähigkeit zur Verfügung zu stellen, kann die zweite Komponente mit einer Schließnaht versehen werden. Die erste Materialkomponente muss also keinen Kompromiss mehr zwischen geringem Materialeinsatz und der Verschließbarkeit mit einer Schließnaht.

Das Materialstück kann auf unterschiedliche Arten an der ersten Materialkomponente befestigt sein. Bevorzugt ist eine Verbindung mittels eines Klebstoffs oder eines Extrudats. Denkbar ist aber auch eine Verschweißung beider Materialkomponenten.

In einer vorteilhaften Weiterbildung des erfindungsgemäßen Sacks ist vorgesehen, dass nur Teilbereiche des zumindest einen Materialstücks an der ersten Materialkomponente befestigt ist, so dass der Materialeinsatz reduziert ist.

Besonders vorteilhaft ist es, wenn in Längsrichtung des Sacks gesehen die Befestigung des Materialstücks an der ersten Komponente und die Schließnaht an unterschiedlichen Stellen angeordnet ist. Mit dieser Maßnahme wird demnach die Schließnaht an einer Stelle angeordnet, wo das Materialstück keinen direkten Kontakt mit der ersten Materialkomponente hat, so dass insbesondere das Verschweißen keinen oder zumindest einen reduzierten Einfluss auf die erste Materialkomponente hat. Bevorzugt ist dabei, wenn die Schließnaht näher an dem Sackkopf oder dem Sackboden angeordnet ist, als die Stelle, an der das Materialstück an der ersten Materialkomponente befestigt ist. Während die Schweißnaht eine Schließnaht mit hoher Festigkeit darstellt, die auf Zug nach außen belastet werden kann, wirken auf die Fügestelle lediglich Scherkräfte, die in der Regel niedrigere Anforderungen an eine Verbindung stellen. Daher ist an dieser Stelle eine Klebe- oder Extrudatverbindung ausreichend.

Weitere Ausführungsbeispiele der Erfindung gehen aus der gegenständlichen Beschreibung und den Ansprüchen hervor.

Die einzelnen Figuren zeigen:
- Fig. 1: Ansicht einer bekannten FFS-Maschine, mit welcher das erfindungsgemäße Verfahren durchführbar ist.
- Fig. 2: Ansicht einer Vorrichtung zur Schlauchbildung
- Fig. 3: Aufsicht auf ein mit Zetteln versehenes Flachbahnmaterial
- Fig. 4: Darstellung der Schlauchbildung
- Fig. 5: Aufsicht auf ein mit einer weiteren Bahn versehenes Flachbahnmaterial
- Fig. 6: Ansicht eines Sacks, der nach dem erfindungsgemäßen Verfahren hergestellt worden ist.
- Fig. 7: Ansicht VII - VII aus der Figur 6
- Fig. 8: Teilansicht eines mit Füllgut befüllten Sacks
- Fig. 9a - d: Ausschnitte von Sackwandungen mit verschiedenen Materialkomponenten

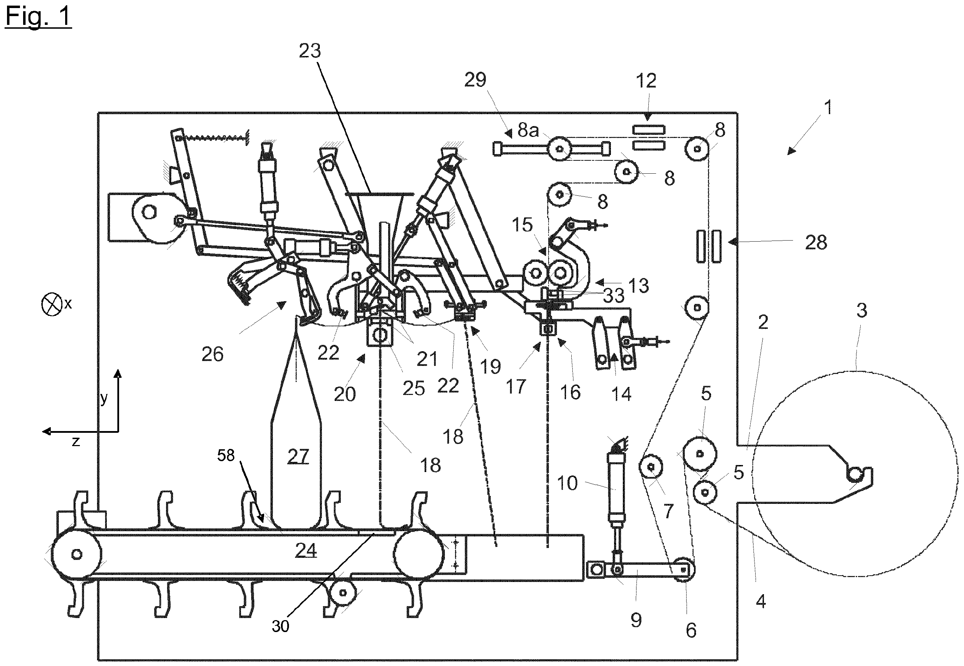

Die Figur 1 zeigt eine FFS-Maschine, wie sie vorteilhafterweise Bestandteil eines Systems ist, mit welchem das erfindungsgemäße Verfahren durchführbar ist. Diese Vorrichtung 1 umfasst einen Tragarm 2, auf welchem ein Wickel 3 mit einer Schlauchbahn 4 aufliegt. Die Schlauchbahn 4 weist in Figur 1 nicht dargestellte Seitenfalten 56 auf. Die Transportwalzen 5, die zum Teil auch angetrieben sein können, sorgen für eine, in der Regel kontinuierliche, Abwicklung der Schlauchbahn 4. Der durch eine Kolben-Zylinder-Einheit 10 mit einer Last beaufschlagte Hebel 9, welcher eine Umlenkwalze 6 trägt und insgesamt häufig als Tänzereinrichtung bezeichnet wird, und die Transportwalze 7, 8 und das Vorschubrollenpaar 15 sorgen insgesamt auf an sich bekannte Weise dafür, dass die Schlauchbahn 4 auf ihrem weiteren Transportweg taktweise intermittierend weiterbewegt wird. Die Transportwalze 8a ist Bestandteil einer Registervorrichtung 29, mit welcher die Länge des Transportweges der Schlauchbahn 4 an das Format der späteren Säcke angepasst werden kann. Zusätzlich kann die Registervorrichtung dazu eingerichtet sein, dafür zu sorgen, dass die weitere beziehungsweise zweite Materialkomponente genau passend in die Wirkbereiche der weiter unten beschriebenen Querschweiß- und Querschneidestation gelangen. Dazu ist die Transportwalze 8a relativ zur Vorrichtung 1 verschieblich angeordnet. Zum Verschieben steht ein händisch oder elektromotorisch betriebener und an sich bekannter Spindeltrieb zur Verfügung. Eine Steuerung oder Regelung der Registervorrichtung kann vorgesehen sein.

Im Verlauf ihres Transportes durch die Vorrichtung 1 durchläuft die Schlauchbahn 4 eine Station 28. Es ist möglich, in dieser Station 28 Mittel zum Anbringen von Schweißungen, beispielsweise von Querschweißungen, Diagonal- oder Eckabschweißungen oder/und von Konturschweißungen, vorzusehen. Die Darstellung in Figur 1 lässt offen, ob die Station 28 Eckabschweißungen an beiden Rändern der Schlauchbahn 4 vornehmen können oder ob sie dies jeweils nur an einer Seite können. In dem ersteren Fall ist es vorteilhaft, die Station 28 derart einzurichten, dass sie wahlweise auf einer Seite oder auf beiden Seiten Eckabschweißungen erzeugt. Auf diese Weise können auf einer solchen Vorrichtung 1 wahlweise Beutel, die Eckabschweißungen lediglich auf einer ihrer Seiten aufweisen oder normale FFS-Säcke mit vier Eckabschweißungen hergestellt werden.

Der Schweißvorgang bei dieser Station erfolgt dabei vorteilhafterweise während der Stillstandsphasen des intermittierenden Transports. Über weitere Transportwalzen 8 wird die mit Schweißungen versehene Schlauchbahn 4 zu einer Kühlstation 12 gefördert, in welcher die Schweißnähte abgekühlt werden.

Mit dem Vorschubrollenpaar 15 wird die Schlauchbahn 4 durch die Schweißbacken 33 einer Querschweißstation 13 und durch eine Querschneidestation 16 hindurch geschoben. Die Werkzeuge der Querschweißstation 13 und der Querschneidestation 16 können auf nicht näher beschriebene Weise, beispielsweise durch eine Parallelogrammanordnung 14, in Ebenen orthogonal zur Vorschubrichtung der Schlauchbahn 4 auf diese zu und von dieser weg bewegt werden. Nachdem die Greifer 17 die Schlauchbahn 4 ergriffen haben, wird oberhalb der Greifer 17 ein Schlauchstück 18 in der Querschneidestation 16 von der Schlauchbahn 4 abgetrennt. Zeitgleich wird oberhalb der Schnittkante an der Schlauchbahn 4 in der Querschweißstation 13 eine Querschweißung 11 angebracht, welche den Boden oder die Kopfseite des im nächsten Arbeitstakt der Vorrichtung 1 zu bildenden Schlauchstücks 18 darstellt. Dementsprechend werden in der Querschweißstation 13 Kopfnähte erzeugt. Allgemein kann die Herstellung der Kopf- oder Bodennähte jedoch nicht nur, auch wenn vorzugsweise, durch eine Querschweißung erfolgen, sondern es sind auch weitere Fügeverfahren, etwa das Kleben, denkbar. Auch das Vernähen mit einem Faden ist grundsätzlich denkbar.

Die Greifer 17 befördern das Schlauchstück 18 zu einem Übergabepunkt, an dem weitere Greifer 19 das Schlauchstück 18 erfassen und zu einer Füllstation 20 transportieren. Dort wird das Schlauchstück 18 an stationäre Greifer 21 übergeben und von den Saugern 22 geöffnet, so dass das Füllgut, welches durch den Füllstutzen 23 geleitet wird, in das Schlauchstück 18 gelangen kann. Das Schlauchstück 18 liegt dabei mit seinem unteren Ende auf einem Transportband 24 auf, so dass das Schlauchstück 18 während des Befüllvorganges nicht übermäßig entlang seiner Längskanten belastet wird. Weitere Greifer 25 befördern das befüllte Schlauchstück zur Kopf- oder Bodennahtschweißstation 26, in der das Schlauchstück 18 mit einer Kopf- bzw. Bodenschweißnaht verschlossen wird und so einen fertigen Sack 27 bildet. Die genannte Schließnaht erfolgt dabei im Bereich der zweiten Materialkomponente, beispielsweise im Bereich des Zettels, wenn ein solcher die zweite oder weitere Materialkomponente darstellt. Auch das Verschließen des Schlauchstücks 18 in seinem Kopfbereich kann durch ein anderes Fügeverfahren erfolgen. Der fertige Sack 27 wird von dem Transportband 24 aus der Vorrichtung 1 heraus geführt.

In Figur 1 ist auch ein Rüttler 30 gezeigt, der unterhalb der Abfüllstation unterhalb des Förderbades angebracht ist und der dem Sack 27 in der Abfüllstation Schwingungen vermitteln kann, um das abgefüllte Material zu verdichten.

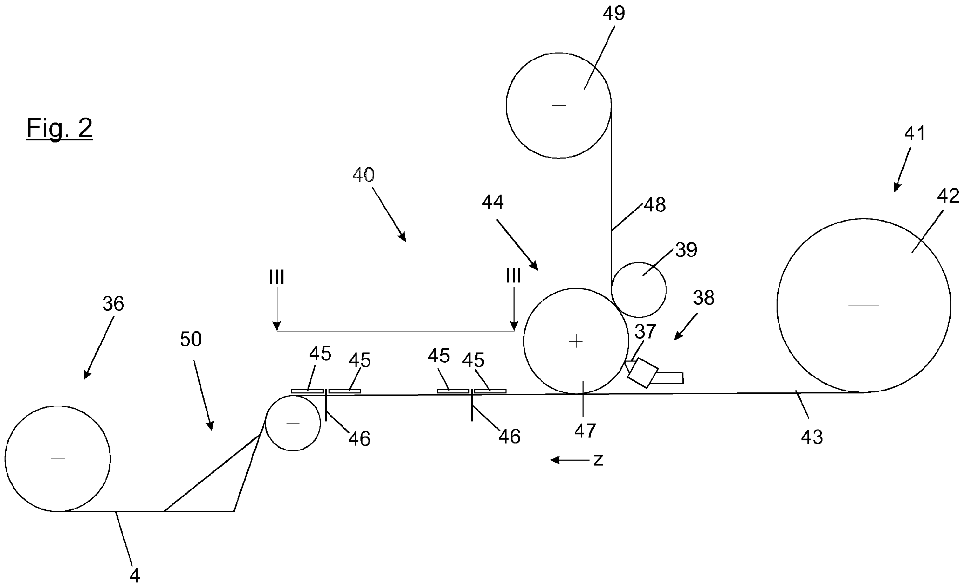

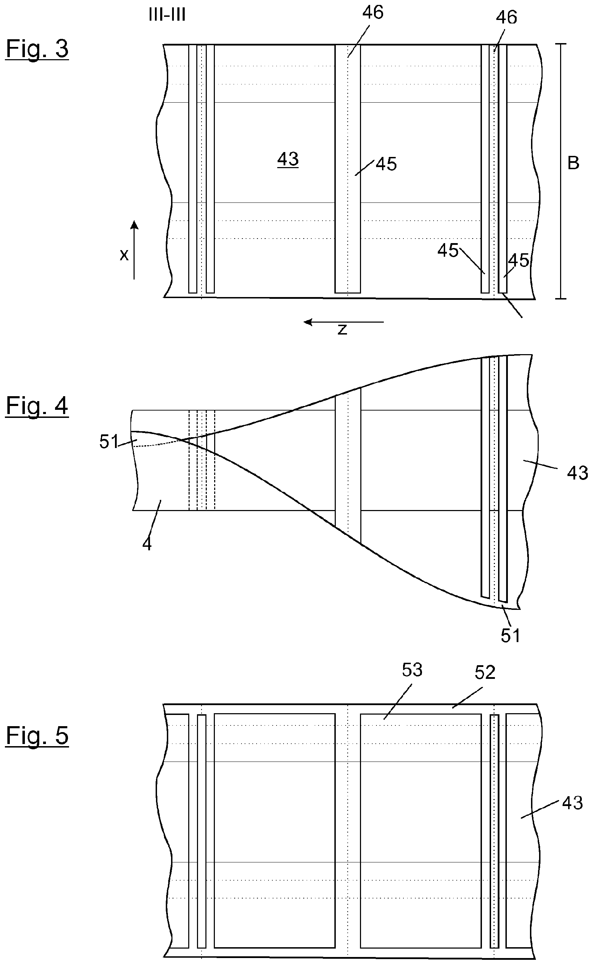

Eine zur Durchführung des erfindungsgemäßen Verfahrens wichtige Vorrichtung ist die Vorrichtung zur Schlauchbildung 40, die in Figur 2 gezeigt ist. In einer Abwickeleinrichtung 41 wird von einem Wickel 42 über nicht dargestellte Vorzugseinrichtungen Flachbahnmaterial 43 abgezogen. In der sich anschließenden Applikationsstation 44 wird das Flachbahnmaterial 43 mit Zetteln oder Streifen, mit bahnförmigem Material oder mit Klebstoff- oder Extrudataufträgen versehen. Im Beispiel der Figur 2 sind solche Applikationen als Zettel 45 dargestellt. Es ist zu erkennen, dass in Richtung z gesehen an einigen Stellen Applikationen aufgetragen werden weitere Stellen jedoch frei bleiben, so dass sich die Beschaffenheit des Flachbahnmaterials in Richtung der Schlauchachse ändert. Wie anhand des Beispiels der Figur 3 noch zu sehen sein wird, erstrecken sich diese Zettel 45 nicht über die gesamte Breite des Flachbahnmaterials, sondern nur über Teilbereiche.

Im vorliegenden Ausführungsbeispiel werden jeweils zwei Zettel 45 in benachbart auf das Flachbahnmaterial 43 aufgetragen. Die beiden Zettel 45 sind lediglich durch einen schmalen, freien Bereich voneinander getrennt, in dem später die Quertrennungen vorgenommen werden, mit denen die noch zu bildende Schlauchbahn zu einzelnen Schlauchstücken vereinzelt wird. Gleichwohl kann auch ein breiter Zettel aufgetragen werden der später bei der Bildung von Schlauchstücken in zwei Teile, vorzugsweise in zwei Hälften, geteilt wird, so dass ein Teil des so getrennten Zettels im Schlauchstück zugeordnet werden kann und der zweite Teil des Zettels noch in der Schlauchbahn verbleibt. Der spätere Quertrennschnitt ist in Figur 2 durch die Markierung 46 angedeutet. Der Abstand zwischen zwei Markierungen 46 entspricht in der Regel der Länge des späteren Schlauchstücks 18.

Die Applikationsstation 44 umfasst eine Auftragswalze 47 sowie eine Vereinzelungseinrichtung, mit der die Bahn 48, welche von einem Wickel 49 abgewickelt wird, in die einzelnen Zettel 45 aufgetrennt wird. Als Beispiel einer solchen Vereinzelungseinrichtung kann eine Trennwalze 39 vorgesehen sein, die ein nicht gezeigtes Trennmesser tragen kann. Für das Trennmesser der Trennwalze 39 wirkt die Auftragswalze 47 als Gegendruckelement.

Weiterhin kann eine Extrudatauftragseinrichtung 38 vorgesehen sein, mit welcher das zur Verbindung notwendige Extrudat auf das Flachbahnmaterial 43 und/oder auf die Zettel 45 auftragbar ist. Der Auftrag erfolgt über eine oder mehrere in Richtung quer zur Transportrichtung angeordneten Auftragsdüsen 37 Ist eine oder eine nicht die gesamte Breite abdeckende Anzahl solcher Auftragsdüsen vorgesehen, kann diese in Querrichtung bewegbar sein. Anstelle der Extrudatauftragseinrichtung kann auch eine Klebstoffauftragseinrichtung vorgesehen sein. Diese kann ebenfalls Auftragsdüsen umfassen, kann aber auch Klebstoffauftragswalzen oder -stempel als Klebstoffauftragswerkzeug beinhalten. Ein Klebstoff- oder Extrudatauftrag in gewünschtem Format ist mit jeder der beschriebenen Einrichtungen möglich. Bevorzugt ist die Fläche des Formats kleiner als die Fläche der Zettel 45.

In anderen Ausführungsbeispielen kann die Applikationsstation 44 gänzlich anders ausgestaltet sein. Sollte diese Station 44 dazu vorgesehen sein Klebstoff auf das Flachbahnmaterial 43 aufzutragen, können beispielsweise Klebstoffauftragsdüsen vorgesehen sein, welche über entsprechend angesteuerte Ventile Klebstoff bereichsweise auf das Flachbahnmaterial 43 auftragen.

Der Applikationsstation 44 schließt sich eine Schlauchbildungsstation 50 an, in welcher aus dem Flachbahnmaterial 43 in an sich bekannter Weise eine Schlauchbahn 4 gebildet wird. Diese Schlauchbahn 4 kann nun aufgewickelt und in Form eines Wickels 3 der Vorrichtung 1 zum Herstellen und Befüllen von Säcken zugeführt werden. Das Aufwickeln der Schlauchbahn mit der Aufwickelvorrichtung 36 ist besonders bevorzugt. Denkbar ist aber auch, dass die Schlauchbahn 4 der genannten Vorrichtung 1 inline, d. h. ohne den Zwischenschritt des Aufwickelns, zugeführt wird. Beide und weitere Ausgestaltungsmöglichkeiten sind von der vorliegenden Erfindung mit umfasst.

Die Figur 3 zeigt nun eine Aufsicht auf das Flachbahnmaterial 43 gemäß Ansicht III-III Figur 2. in dieser Figur sind mehrere Beispiele für verschiedenartige Zettel 45 gezeigt. An der rechten Seite sind zwei separate Zettel 45 zu erkennen die durch einen schmalen Bereich, der die bereits erläuterte Markierung 46 umfasst, getrennt sind. Wie bereits angedeutet erstrecken sich die Zettel 45 nicht über die gesamte Breite B des Flachbahnmaterials 43, sondern lassen einen schmalen Randbereich 51 frei. Dieser schmale Randbereich 51 überlappt bei der Schlauchbildung (siehe Figur 4) den anderen eingeschlagenen Rand. Diese sich nun überlappenden Bereiche können beispielsweise durch Auftragen von Klebstoff oder von Extrudat miteinander verbunden werden, so dass die Schlauchbahn 4 entsteht.

In der Figur 3 ist in der Mitte des dargestellten Bereichs des Flachbahnmaterials 43 ein einziger Zettel 45 gezeigt, in dessen Bereich die Markierung 46 verläuft. Wie bereits beschrieben, wird auch dieser Zettel 45 bei der Bildung von Schlauchstücken in zwei einzelne Teilzettel separiert.

Aus der Figur 4 ist zu erkennen, dass aus den Zettel 45 bei der Schlauchbildung Ringe entstehen können, die auf der inneren Oberfläche der Schlauchbahn umlaufend oder nahezu umlaufend sind. Es ist in diesem Zusammenhang auch denkbar auf das Freilassen eines Randbereichs 51 zu verzichten, so dass sich bei der Schlauchbildung auch die Zettel 45 mit sich selbst überlappen.

Die Figur 5 zeigt ein weiteres Ausführungsbeispiel nach dem erfindungsgemäßen Verfahren. In diesem Fall wurde auf das Flachbahnmaterial 43 eine Bahn 52 appliziert, wobei die Bahn 52 freie Bereiche 53 umfasst, die beispielsweise durch Ausstanzungen entstanden sind. Das durch die Ausstanzungen zurückbehaltene Material kann beispielsweise einer Wiederverwertung zugeführt werden, so dass es letztendlich zu Materialeinsparungen kommt. Eine zur Erzeugung der Ausstanzungen nötige Stanze kann beispielsweise in der in Figur 3 gezeigten Applikationsstation 44 integriert sein. In diesem Ausführungsbeispiel können beispielsweise die beiden in Längsrichtung verlaufenden Bereiche der Bahn 52, die in den Randbereichen des Flachbahnmaterials angeordnet sind, in Kontakt gebracht und miteinander verbunden werden. Es entsteht dabei ein nach außen abstehender Streifen, der aber später auf die Schlauchbahn oder auf den Sackkörper zurückgeschlagen werden kann, so dass er nicht stört.

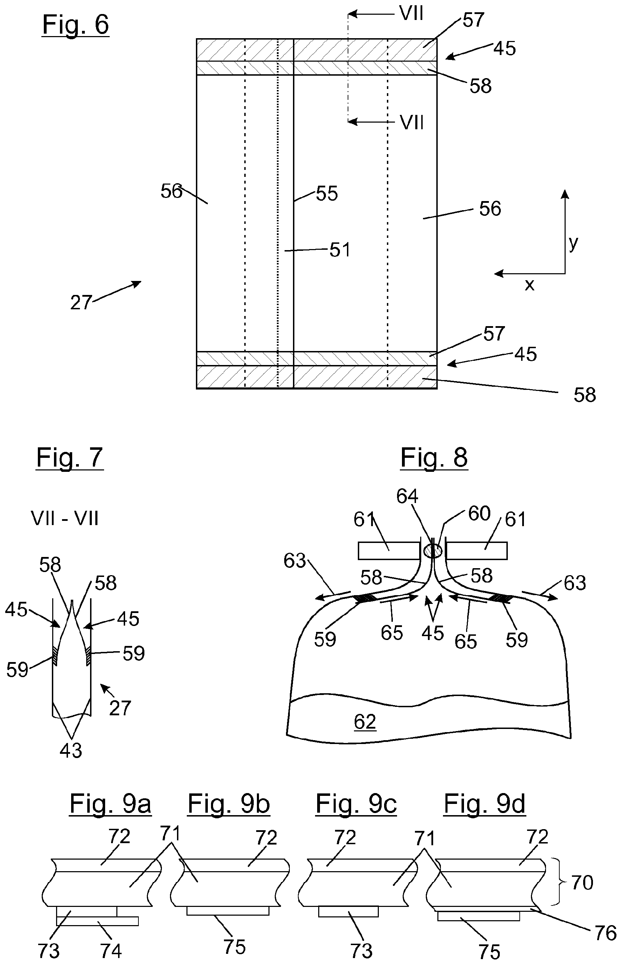

Die Figur 6 zeigt nun ein Ausführungsbeispiel einen fertigen Sack 27. Bei diesem Sack 27 ist die Längsnaht 55 zu erkennen, die von der Schlauchbildung resultiert. Der Randbereich 51, mit dem sich das Flachbahnmaterial bei der Schlauchbildung mit sich selbst überlappt, ist durch eine durchgezogene und durch eine unterbrochene Linie dargestellt, wobei die letztere eine beim Sack 27 nicht sichtbare Linie ist.

Das gezeigte Ausführungsbeispiel eines Sacks 27 umfasst noch Seitenfalten 56, die in an sich bekannter, aber nicht gezeigter Weise während der Schlauchbildung eingelegt werden können.

Am oberen und am unteren Ende des Sacks 27 sind auf der Innenoberfläche jeweils Zettel 45 befestigt, mit welchen der Sack 27 verschlossen ist. In dem Bereich 57, der schraffiert dargestellt ist, sind die Zettel 45 vor der Schlauchbildung mit dem Sackmaterial verbunden, beispielsweise verklebt, worden. Die Verbindungsnaht 59 ist in der Figur 7, in welcher eine Seitenansicht des Sacks 27 dargestellt ist, deutlich zu sehen. Der verbundene Bereich 59 erstreckt sich in Richtung x über die vollständige Breite des Sacks 27 und des Zettels 45. In Längsrichtung (Richtung y) hingegen erstreckt sich der verbundene Bereich nicht über die gesamte Länge oder Höhe des Zettels 45. Damit verbleibt ein Bereich 58, in dem der Zettel 45 nicht mit dem Flachbahnmaterial verbunden wurde. Dieser Bereich ist in der Figur 6 andersartig schraffiert. Dieser nicht verbundene Bereich 58 dient dazu, den Sack 27 nach seiner Befüllung zu verschließen, wobei der Zettel in diesen Bereichen 58 mit sich selbst verbunden wird. Dieses kann durch Schweißen oder Siegeln erfolgen, aber auch die Einwirkung von Ultraschall oder Strahlung wie etwa Laserstrahlung sind zur Herbeiführung einer Verbindung vorteilhaft. Viele weitere Fügeverfahren sind an dieser Stelle vorteilhaft einsetzbar.

Die Figur 8 zeigt nun die Situation, in der der mit Füllgut 62 befüllte Sack 27 verschlossen wird. Erkennbar sind hier wieder die Verbindungsnähte 59 und die nicht verbundenen Bereiche 58. Dargestellt ist hier ein Fügebereich 60, auf den die Fügewerkzeuge 61, die vorzugsweise Bestandteil der Kopf - oder Bodennahtschweißstation 26 sind, einwirken, um die Zettel 45 entlang einer Fügenaht 64, also der Kopf- oder Bodennaht, miteinander zu verbinden und um so den Sack 27 zu verschließen. In diesem Ausführungsbeispiel ist vorgesehen, die Fügewerkzeuge außenseitlich in Kontakt mit dem Sack 27 zu bringen. Denkbar ist aber auch, das Fügewerkzeug zwischen dem Flachbahnmaterial 43 und den Zetteln 45 einzuführen. Weiterhin ist denkbar, zunächst die Zettel 45 miteinander zu verbinden und anschließend noch das Flachbahnmaterial 43 mit den Zetteln 45 zu verbinden, wobei letztere Verbindung nicht zwangsläufig belastbar ausgeführt werden muss.

Mit der Figur 8 werden zudem die Kräfteverhältnisse verdeutlicht, die in dem befüllten Sack, der nach einem erfindungsgemäßen Verfahren hergestellt worden sind, herrschen. Das Füllgut 62, welches bei Industrieschüttgütern oft ein Gewicht von mehr als 25 kg aufweisen kann, drückt die Seitenwände des Sacks 27 nach außen, so dass der obere Bereich des Sacks, in dem die Wände eine eher horizontale Richtung aufweisen, eine Kraft in Längsrichtung des Flachbahnmaterials erfährt, was durch die Kraftpfeile 63 angedeutet ist. Die über die Fügenaht 64 miteinander verbundenen Zettel 45 stellen über die Verbindungsnähte 59 Gegenkräfte 65 zur Verfügung, so dass der Sack 27 zuverlässig verschlossen ist.

Die Figuren 9a bis 9d zeigen nun noch einmal Ausschnitte von Sackwandungen mit verschiedenen Materialkomponenten. Allen Teilfiguren gemeinsam ist die erste Komponente 70, die in dem gezeigten Ausführungsbeispiel aus zwei Schichten besteht. Die Hauptschicht 71 kann ein Gewebe aus gereckten Kunststoffbändchen sein, die mit einer Beschichtung 72, ebenfalls aus einem Kunststoff, versehen sein kann. Die Beschichtung 72 würde bei einem fertigen Sack nach außen zeigen. Die weiteren Komponenten beziehungsweise Beschichtungen sind nach innen gerichtet.

Die Figuren 9a und 9c zeigen nun eine bereichsweise Beschichtung der ersten Komponente 70 mit einer zweiten Komponente 73, wobei die Beschichtung das bereits mehrfach erwähnte Extrudat, ein Hotmelt-Kleber oder ein Flüssigkleber sein kann.

In der Figur 9a ist eine dritte Komponente 74 dargestellt, die ein Folienstück oder -zettel sein kann. In der Figur 9b ist dieser Zettel ebenfalls dargestellt, aber in diesem Ausführungsbeispiel aufgeschweißt oder aufgesiegelt worden. Er bildet daher die zweite Komponente, die zur Unterscheidung von der aus einem Extrudat erzeugten zweiten Komponente 73 mit dem Bezugszeichen 75 versehen wurde.

Die Figur 9d zeigt nun ein bisher nicht erwähntes Ausführungsbeispiel. Hier besteht die zweite Komponente aus einer vollflächigen oder zumindest großflächigen (mehr als 80% der Fläche beschichtet) Beschichtung 76, die sich mittels Auftragswalzen leicht auf die erste Komponente auftragen lässt und als Bestandteil dieser angesehen werden kann. Diese Beschichtung kann mit einer Schichtdicke von weniger als 20 Mikrometer, vorzugsweise 10 Mikrometer, als dünn angesehen werden. Auf diese Beschichtung 76 kann nun eine zweite Komponente in Form eines Zettels aufgebracht werden, beispielsweise durch Siegeln oder Schweißen.

In dieser Patentanmeldung sind zahlreiche Merkmale dargestellt, die oft jedoch nur im Zusammenhang mit bestimmten Ausführungsbeispielen erläutert worden sind. Dennoch wird ausdrücklich betont, dass trotzdem alle aufgeführten Merkmale miteinander kombinierbar sind, um neue vorteilhafte Ausführungsbeispiele zu erhalten, die den grundlegenden erfinderischen Gedanken realisieren können.

| **Bezugszeichenliste** | |
|---|---|
| 1 | Vorrichtung zum Herstellen und Befüllen von Säcken |
| 2 | Tragarm |
| 3 | Wickel |
| 4 | Schlauchbahn |
| 5 | Transportwalze |
| 6 | Umlenkwalze |
| 7 | Transportwalze |
| 8 , 8a | Transportwalze |
| 9 | Hebel |
| 10 | Kolben-Zylinder-Einheit |
| 11 | Querschweißung |
| 12 | Kühlstation |
| 13 | Querschweißstation |
| 14 | Parallelogrammanordnung |
| 15 | Vorschubrollenpaar |
| 16 | Querschneidestation |
| 17 | Greifer |
| 18 | Schlauchstück |
| 19 | Greifer |
| 20 | Füllstation |
| 21 | Stationärer Greifer |
| 22 | Sauger |
| 23 | Füllstutzen |
| 24 | Transportband |
| 25 | Greifer |
| 26 | Kopf- oder Bodennahtschweißstation |
| 27 | Sack |
| 28 | Station zum Einbringen von Schweißungen |
| 29 | Registervorrichtung |
| 30 | Rüttler |
| 31 | Schweißbalken |
| 32 | |
| 33 | |
| 34 | |
| 35 | |
| 36 | Aufwickelvorrichtung |
| 37 | Auftragsdüse |
| 38 | Extrudatauftragseinrichtung |
| 39 | Trennwalze |
| 40 | Vorrichtung zur Schlauchbildung |
| 41 | Abwickeleinrichtung |
| 42 | Wickel |
| 43 | Flachbahnmaterial |
| 44 | Applikationsstation |
| 45 | Zettel |
| 46 | Markierung |
| 47 | Auftragswalze |
| 48 | Bahn |
| 49 | Wickel |
| 50 | Schlauchbildungsvorrichtung |
| 51 | Randbereich |
| 52 | Bahn |
| 53 | freier Bereich |
| 54 | |
| 55 | Längsnaht |
| 56 | Seitenfalten |
| 57 | verbundener Bereich |
| 58 | nicht verbundener Bereich |
| 59 | Verbindungsnaht |
| 60 | Fügebereich |
| 61 | Fügewerkzeug |
| 62 | Füllgut |
| 63 | Kraftpfeil |
| 64 | Fügenaht |
| 65 | Gegenkraft |
| 66 | |
| 67 | |
| 68 | |
| 69 | |
| 70 | erste Komponente |
| 71 | Hauptschicht |
| 72 | Beschichtung |
| 73 | zweite Komponente |
| 74 | dritte Komponente |
| 75 | zweite Komponente |
| 76 | großflächige Beschichtung |
| B | Breite des Flachbahnmaterials |
| x | Richtung quer zur Erstreckungsrichtung der Säcke, Schlauchstücke und des Flachbahnmaterials |
| y | vertikale Richtung in der Vorrichtung 1 |
| z | Transportrichtung des Flachbahnmaterials, Richtung der Längsachse des Flachbahnmaterial |

## Patentansprüche

1. Verfahren zum Herstellen, Befüllen und Verschließen von Säcken (27)
- bei welchem aus einem Flachbahnmaterial umfassend eine erste Materialkomponente (43) ein Schlauchmaterial (4) gebildet wird,
- bei welchem Schlauchstücke (18) durch die Quertrennung von Schlauchmaterial (4), die über eine Längsachse verfügen, gebildet werden,
- bei welchem die Schlauchstücke (18) durch eine erste Querfügung mit einer Bodennaht versehen werden, so dass Säcke (27) entstehen,
- bei welchem die Säcke durch ihre verbliebene Öffnung befüllt werden,
- und bei welchem die verbliebene Öffnung der Säcke(27) durch eine zweite Querfügung mit einer Kopfnaht (64) versehen wird
**dadurch gekennzeichnet,**
- **dass** dem Flachbahnmaterial vor der Bildung der Säcke zumindest eine zweite Materialkomponente (45, 48) beigefügt wird,
- **dass** die Beifügung der zumindest zweiten Komponenten (43; 45, 48) des Flachbahnmaterials in Richtung der Schlauchachse nicht vollflächig erfolgt, so dass sich die Beschaffenheit des aus dem Flachbahnmaterial gebildeten Schlauchmaterials in der Richtung der Schlauchachse zumindest in Teilbereichen der Schlauchbreite (B) ändert, wobei die zumindest eine weitere Materialkomponente in Form von Zetteln dem Flachbahnmaterial beigefügt wird, wobei die Zettel am oberen und unteren Ende des Sacks auf der Innenoberfläche befestigt werden.

2. Verfahren nach dem vorstehenden Anspruch
**dadurch gekennzeichnet, dass**
die Zusammenführung der zumindest zwei Komponenten des Schlauchmaterials vorgenommen wird, indem auf die erste Materialkomponente eine die zweite Komponente bildende Schicht aus Extrudat oder Flüssigkleber aufgebracht wird.

3. Verfahren nach dem vorstehenden Anspruch
**dadurch gekennzeichnet, dass**
die Dicke der Schicht aus Extrudat oder Flüssigkleber, die auf die erste Materialkomponente aufgebracht wird, zumindest in Teilbereichen der Schlauchbreite in der Richtung der Schlauchachse variiert wird.

4. Verfahren nach einem der vorstehenden Ansprüche
**dadurch gekennzeichnet, dass**
die weitere Materialkomponente mit dem Flachbahnmaterial nicht über die ganze Länge und/oder Breite der weiteren Materialkomponente verbunden wird.

5. Verfahren nach einem der vorstehenden Ansprüche
**dadurch gekennzeichnet, dass**
zumindest eine der beiden Quertrennungen des Schlauches, die der Bildung der Schlauchstücke zugrunde liegt, entlang einer Linie durchgeführt wird, in deren Bereich sich die weitere Materialkomponente befindet.

6. Verfahren nach einem der vorstehenden Ansprüche
**dadurch gekennzeichnet, dass**
zumindest eine der beiden Quertrennungen des Schlauches, die der Bildung der Schlauchstücke zugrunde liegt, entlang einer Linie durchgeführt wird, in deren Bereich die weitere Materialkomponente nicht über ihre gesamte Breite und/oder Länge mit dem Schlauchmaterial verbunden ist.

7. Verfahren nach einem der vorstehenden Ansprüche
**dadurch gekennzeichnet, dass**
bei zumindest einer der beiden Querfügungen, die zur Bildung und Schließung der Säcke notwendig sind, nicht alle Schichten des Schlauchmaterials in einem Fügeprozess zu einer Fügenaht verbunden werden.

8. Verfahren nach dem vorstehenden Anspruch
**dadurch gekennzeichnet, dass**
bei zumindest einer der beiden Querfügungen, die zur Bildung und Schließung der Säcke notwendig sind, die zumindest zwei unterschiedlichen Schichten des Schlauchmaterials in zumindest zwei Fügeprozessen verschlossen werden.

9. Verfahren nach einem der beiden vorstehenden Ansprüche
**dadurch gekennzeichnet, dass**
das Fügen einer inneren der zumindest zwei unterschiedlichen Schichten durch Fügewerkzeuge vorgenommen wird, die ihre Arbeitsposition innerhalb der Ausdehnung der äußeren Schicht in der Richtung der Schlauchstückachse erreichen.

10. Schlauchmaschine (40) zum Herstellen einer Schlauchbahn, welche in einer Vorrichtung zum Herstellen, Befüllen und Verschließen von Säcken (27) zu Säcken verarbeitbar ist, zumindest umfassend:
- eine Abwickeleinrichtung (41) für zumindest eine Flachbahn (43) aus einer ersten Materialkomponente,
- eine Schlauchbildungseinrichtung (50) zum Bilden einer Schlauchbahn (4), welche über eine Längsachse verfügt, aus der Flachbahn (43),
**dadurch gekennzeichnet, dass**
- zumindest eine Applikationseinrichtung (44) zum Aufbringen zumindest einer zweiten, schweißbaren Materialkomponente vorgesehen ist, mit welcher die Aufbringung der zumindest zweiten Komponenten des Schlauchmaterials (43) in Richtung der Längsachse der Schlauchbahn (4) bereichsweise durchführbar ist, so dass sich die Beschaffenheit des Schlauchmaterials (43) in der Richtung der Längsachse des Schlauches (4) zumindest in Teilbereichen des Schlauches (4) ändert, wobei die zweite Materialkomponente Zettel umfasst, wobei die Zettel mittels der Applikationsvorrichtung am oberen und unteren Ende und auf der Innenoberfläche des späteren Sacks befestigbar sind.

11. Schlauchmaschine nach dem vorstehenden Anspruch
**dadurch gekennzeichnet, dass**
die Applikationseinrichtung eine Abwickeleinrichtung umfasst, von welcher die auf einem Wickel aufgewickelte, bahnförmige zweite Materialkomponente abwickelbar ist.

12. Schlauchmaschine nach einem der beiden vorstehenden Ansprüche,
**dadurch gekennzeichnet, dass**
die Applikationseinrichtung eine Trenneinrichtung umfasst, mit welcher die bahnförmige zweite Materialkomponente in einzelne Bahnabschnitte trennbar ist.

13. Schlauchmaschine nach einem der drei vorstehenden Ansprüche,
**dadurch gekennzeichnet, dass**
eine Klebstoff-, Beschichtungs- oder Extrudatauftragseinrichtung vorgesehen ist, mit welcher ein Klebstoff, eine Beschichtung oder ein Extrudat auf die erste und/oder auf die zweite Materialkomponente auftragbar ist.

14. Schlauchmaschine nach einem der vier vorstehenden Ansprüche,
**dadurch gekennzeichnet, dass**
die Schlauchbahn mit einer Aufwickelaufrichtung (36) aufwickelbar ist.

15. System (2, 40) zum Herstellen, Befüllen und Verschließen von Säcken (27), zumindest umfassend:
- eine Abwickeleinrichtung (41) für eine Flachbahn (43) aus einer ersten Materialkomponente,
- eine Schlauchbildungseinrichtung (50) zum Bilden einer Schlauchbahn (4), welche über eine Längsachse verfügen, aus der Flachbahn (43),
- eine Quertrenneinrichtung (16) zum Abtrennen von Schlauchstücken (18) von der Schlauchbahn (4),
- eine Querfügeeinrichtung (13) zum Bilden einer Bodennaht eines Schlauchstückes(18),
- eine Fülleinrichtung (23) zum Befüllen von Schlauchstücken (18) durch die verbliebene Öffnung,
- eine weitere Querfügeeinrichtung (26), mit welcher die verbliebene Öffnung mittels einer Querfügung (64) verschließbar ist,
**gekennzeichnet durch**
eine Schlauchmaschine nach den Ansprüchen 10 bis 14.

16. Sack (27), umfassend eine erste Materialkomponente, eine Längsachse und zumindest eine Schließnaht, welche im Wesentlichen quer zur Längsachse verläuft und mit welcher der Sack zumindest einendig verschlossen ist,
**dadurch gekennzeichnet,**
**dass** zumindest eine zweite Materialkomponente im Sackinneren vorgesehen ist, wobei die zumindest eine zweite Materialkomponente in Richtung der Längsachse des Sacks (27) derart variiert ist, dass die Beschaffenheit des Schlauchmaterials in der Richtung der Längsachse zumindest in Teilbereichen der Sackbreite (B) geändert ist, wobei die zumindest eine weitere Materialkomponente in Form von Zetteln vorgesehen sind, wobei die Zettel am oberen und unteren Ende des Sacks auf der Innenoberfläche befestigt sind.

17. Sack nach dem vorstehenden Anspruch,
**dadurch gekennzeichnet, dass**
die zweite Komponente zumindest ein Materialstück, insbesondere einen Zettel, umfasst, an welchem die zumindest eine Schließnaht angebracht ist.

18. Sack nach einem der beiden vorstehenden Ansprüche
**dadurch gekennzeichnet, dass**
das zumindest eine Materialstück an der ersten Materialkomponente mit einem Klebstoff oder mit einem Extrudat befestigt ist.

19. Sack nach einem der beiden vorstehenden Ansprüche
**dadurch gekennzeichnet, dass**
nur Teilbereiche des zumindest einen Materialstücks an der ersten Materialkomponente befestigt ist.

20. Sack nach dem vorstehenden Anspruch,
**dadurch gekennzeichnet, dass**
in Längsrichtung des Sacks gesehen die Befestigung des Materialstücks an der ersten Komponente und die Schließnaht an unterschiedlichen Stellen angeordnet ist.

21. Sack nach einem der Ansprüche 16 bis 20
**dadurch gekennzeichnet, dass**
die Schließnaht eine Schweißnaht ist.

22. Sack nach einem der Ansprüche 16 - 21
**dadurch gekennzeichnet, dass**
die erste Materialkomponente Papier umfasst.

23. Sack nach einem der Ansprüche 16 - 21
**dadurch gekennzeichnet, dass**
die erste Materialkomponente Kunststofffolie oder ein Gewebe aus Kunststoffbändchen umfasst.

24. Sack nach dem vorstehenden Anspruch
**dadurch gekennzeichnet, dass**
die zumindest eine weitere Materialkomponente eine Kunststofffolie umfasst, dessen Schweißtemperatur niedriger als die der ersten Materialkomponente ist.

## Claims

1. A method for producing, filling and closing bags (27)
- in which a tube material (4) is formed from a flat web material comprising a first material component (43),
- in which tube pieces (18) are formed by the transverse separation of tube material (4), which tube pieces have a longitudinal axis,
- in which the tube pieces (18) are provided with a bottom seam by means of a first transverse joining process, so that bags (27) are produced,
- in which the bags are filled through their remaining opening,
- and in which the remaining opening of the bags (27) is provided with a top seam (64) by means of a second transverse joining process,
**characterized in**
- **that** at least one second material component (45, 48) is added to the flat web material before the bags are formed,
- **that** the addition of the at least two components (43; 45, 48) of the flat web material is not completely carried out in the direction of the tube axis so that the quality of the tube material formed from the flat web material varies in the direction of the tube axis, at least in partial areas of the tube width (B), wherein the at least one further material component in the form of pieces of paper is added to the flat web material, whereby the pieces of paper are attached at the upper and lower end of the bag on the inner surface.

2. A method according to the preceding claim,
**characterized in that**
the combining of the at least two components of the tube material is carried out, **in that** a layer forming the second component made from extrudate or liquid adhesive is applied to the first material component.

3. A method according to the preceding claim,
**characterized in that**
the thickness of the layer made from extrudate or liquid adhesive, which is applied to the first material component, varies in the direction of the tube axis, at least in partial areas of the tube width.

4. A method according to any one of the preceding claims,
**characterized in that**
the further material component is not connected with the flat web material over the entire length and/or width of the further material component.

5. A method according to any one of the preceding claims,
**characterized in that**
at least one of the two transverse separations of the tube, on which the formation of the tube pieces is based, is performed along a line, in the area of which the further material component is located.

6. A method according to any one of the preceding claims,
**characterized in that**
at least one of the two transverse separations of the tube, on which the formation of the tube pieces is based, is performed along a line, in the area of which the further material is not connected over its entire width and/or length with the tube material.

7. A method according to any one of the preceding claims,
**characterized in that**
in at least one of the two transverse joining processes, which are necessary for the formation and the closing of the bags, not all layers of the tube material are connected in a joining process into a joint seam.

8. A method according to the preceding claim,
**characterized in that**
in at least one of the two transverse joining processes, which are necessary for the formation and the closing of the bags, the at least two different layers of the tube material are closed in at least two joining processes.

9. A method according to any one of the two preceding claims,
**characterized in that**
the joining of an inner layer of the at least two different layers is carried out by joining tools, which achieve their work position within the extension of the outer layer in the direction of the tube piece axis.

10. A tube machine (40) for producing a tubular web, which can be processed into bags in a device for producing, filling and closing bags (27), comprising at least:
- an unwinding device (41) for at least one flat web (43) made from a first material component,
- a tube forming device (50) for forming a tube web (4), which has a longitudinal axis, made from the flat web (43),
**characterized in that**
- at least one application device (44) for the application of a least one second, weldable material component is provided, with which the application of the at least second components of the tube material (43) can be performed in some areas in the direction of the longitudinal axis of the tube web (4), so that the quality of the tube material (43) varies in the direction of the longitudinal axis of the tube (4) at least in partial areas of the tube (4), wherein the second material component comprises pieces of paper, wherein the pieces of paper can be attached at the upper and lower end and on the inner surface of the subsequent bag by means of the application device.

11. A tube machine according to the preceding claim,
**characterized in that**
the application device comprises an unwinding device, from which the web-shaped second material component wound on a roll can be unwound.

12. A tube machine according to any one of the two preceding claims,
**characterized in that**
the application device comprises a separating device, with which the web-shaped second material component can be separated into individual web sections.

13. A tube machine according to any one of the three preceding claims,
**characterized in that**
an adhesive-, coating- or extrudate application device is provided, with which an adhesive, a coating or an extrudate can be applied to the first and/or to the second material component.

14. A tube machine according to any one of the four preceding claims,
**characterized in that**
the tube web can be wound-up with a wind-up device (36).

15. A system (2, 40) for producing, filling and closing bags (27), comprising at least:
- an unwinding device (41) for a flat web (43) made from a first material component,
- a tube forming device (50) for forming a tube web (4), which has a longitudinal axis, made from the flat web (43),
- a transverse separation device (16) for the separation of tube pieces (18) from the tube web (4),
- a transverse joining device (13) for the formation of a bottom seam of a tube piece (18),
- a filling device (23) for filling tube pieces (18) through the remaining opening,
- a further transverse joining device (26), with which the remaining opening can be closed by means of a transverse joining process (64),
**characterized by**
a tube machine according to Claims 10 to 14.

16. A bag (27), comprising a first material component, a longitudinal axis and at least one closing seam, which extends substantially transversely to the longitudinal axis and with which the bag is closed at least at one end,
**characterized in**
**that** at least one second material component is provided in the bag interior, wherein the at least one second material component is varied in the direction of the longitudinal axis of the bag (27) in such a manner that the quality of the tube material is changed in the direction of the longitudinal axis at least in partial areas of the bag width (B), wherein the at least one further material component is provided in the form of pieces of paper, wherein the pieces of paper are attached at the upper and lower end of the bag on the inner surface.

17. A bag according to the preceding claim,
**characterized in that**
the second component comprises at least one piece of material, in particular a piece of paper, to which the at least one closing seam is applied.

18. A bag according to any one of the two preceding claims,
**characterized in that**
the at least one piece of material is attached to the first material component with an adhesive or with an extrudate.

19. A bag according to any one of the two preceding claims,
**characterized in that**
only partial areas of the at least one piece of material are attached to the first material component.

20. A bag according to the preceding claim,
**characterized in that**
seen in the longitudinal direction of the bag, the attachment of the piece of material to the first component and the closing seam are arranged at different locations.

21. A bag according to any one of Claims 16 to 20,
**characterized in that**
the closing seam is a welded seam.

22. A bag according to any one of Claims 16 - 21,
**characterized in that**
the first material component comprises paper.

23. A bag according to any one of Claims 16 - 21,
**characterized in that**
the first material component comprises plastic film or a woven fabric made from plastic strips.

24. A bag according to the preceding claim,
**characterized in that**
the at least one further material component comprises a plastic film, the welding temperature of which is lower than that of the first material component.

## Revendications

1. Procédé de fabrication, de remplissage et de fermeture de sacs (27)
- dans lequel, à partir d'un matériau en bande plate comprenant un premier composant de matériau (43), un matériau de type gaine (4) est formé,
- dans lequel des morceaux de gaine (18) sont formés par la découpe transversale de matériau de type gaine (4), qui disposent d'un axe longitudinal,
- dans lequel les morceaux de gaine (18) sont munis d'une première jointure transversale avec un cordon de fond, de façon à obtenir des sacs (27),
- dans lequel les sacs sont remplis à travers leur ouverture restante,
- et dans lequel l'ouverture restante des sacs (27) est munie d'une jointure transversale avec un cordon de tête (64),
**caractérisé en ce que**
- au matériau en bande plate, avant la formation des sacs, est jointe au moins un deuxième composant de matériau (45, 48),
- l'ajout de l'au moins un deuxième composant (43 ; 45, 48) du matériau en bande plate a lieu de manière incomplète dans le sens de l'axe de la gaine, de façon à ce que la qualité du matériau de type gaine formé à partir du matériau en bande plate change dans le sens de l'axe de la gaine au moins à certains endroits de la largeur de la gaine (B), l'au moins un autre composant de matériau étant ajouté au matériau en bande plate sous la forme de feuilles, les feuilles étant fixées aux extrémités supérieure et inférieure du sac sur la surface interne.

2. Procédé selon la revendication précédente,
**caractérisé en ce que**
l'assemblage des au moins deux composants du matériau de type gaine est effectué en appliquant sur le premier composant de matériau une couche formant le deuxième composant, constitué d'un extrudat ou d'une colle liquide.

3. Procédé selon la revendication précédente,
**caractérisé en ce que**
l'épaisseur de la couche d'extrudat ou de colle liquide, qui est appliquée sur le premier composant de matériau, varie au moins à certains endroits de la largeur de gaine dans le sens de l'axe de la gaine.

4. Procédé selon l'une des revendications précédentes,
**caractérisé en ce que**
l'autre composant de matériau n'est pas relié avec le matériau en bande plate sur toute la longueur et/ou la largeur de l'autre composant de matériau.

5. Procédé selon l'une des revendications précédentes,
**caractérisé en ce que**
au moins une des deux découpes transversales de la gaine, qui permet de former les morceaux de gaine, est effectuée le long d'une ligne au niveau de laquelle se trouve l'autre composant de matériau.

6. Procédé selon l'une des revendications précédentes,
**caractérisé en ce que**
au moins une des deux découpes transversales de la gaine, qui permet de former les morceaux de gaine, est effectuée le long d'une ligne au niveau de laquelle l'autre composant de matériau n'est pas relié sur toute sa largeur et/ou longueur avec le matériau de type gaine.

7. Procédé selon l'une des revendications précédentes,
**caractérisé en ce que**
dans au moins une des deux jointures transversales, qui sont nécessaires pour la formation et la fermeture des sacs, toutes les couches du matériau de type gaine ne sont pas reliées dans un processus de jointure en un cordon de jonction.

8. Procédé selon la revendication précédente,
**caractérisé en ce que**
dans au moins une des deux jointures transversales, qui sont nécessaires pour la formation et la fermeture des sacs, les au moins deux couches différentes du matériau de type gaine sont fermées dans au moins deux processus de jonction.

9. Procédé selon l'une des deux revendications précédentes,
**caractérisé en ce que**
la jointure d'une couche interne parmi les au moins deux couches différentes est effectuée à l'aide d'outils de jonction, qui atteignent leur position de travail à l'intérieur de l'extension de la couche externe dans le sens de l'axe des morceaux de gaine.

10. Machine de formation de gaine (40) pour la fabrication d'une bande tubulaire, qui peut être transformée en sacs dans un dispositif de fabrication de remplissage et de fermeture de sacs (27), comprenant au moins :
- un dispositif de déroulement (41) pour au moins une bande plate (43) constituée d'un premier composant de matériau,
- un dispositif de formation de gaine (50) pour la formation d'une bande tubulaire (4), qui dispose d'un axe longitudinal, à partir de la bande plate (43), **caractérisée en ce que**
- au moins un dispositif d'application (44) pour l'application d'au moins un deuxième composant de matériau soudable est prévue, avec laquelle l'application de l'au moins un deuxième composant du matériau de type gaine (43) en direction de l'axe longitudinal de la bande tubulaire (4) peut être effectuée à certains endroits, de façon à ce que la qualité du matériau de type gaine (43) varie dans le sens de l'axe longitudinal de la gaine (4) au moins à certains endroits de la gaine (4), le deuxième composant de matériau comprenant des feuilles, les feuilles pouvant être fixées au moyen du dispositif d'application aux extrémités supérieure et inférieure et sur la surface interne du sac ultérieur.

11. Machine de formation de gaine selon la revendication précédente, **caractérisée en ce que**
le dispositif d'application comprend un dispositif de déroulement à partir duquel le deuxième composant de matériau en forme de bande, enroulé sur un rouleau, peut être déroulé.

12. Machine de formation de gaine selon l'une des deux revendications précédentes,
**caractérisée en ce que**
le dispositif d'application comprend un dispositif de coupe avec lequel le deuxième composant de matériau en forme de bande peut être divisé en portions de bande.

13. Machine de formation de gaine selon l'une des trois revendications précédentes,
**caractérisée en ce que**
un dispositif d'application de colle, de revêtement ou d'extrudat est prévu , avec lequel une colle, un revêtement ou un extrudat peut être appliqué sur le premier et/ou le deuxième composant de matériau.

14. Machine de formation de gaine selon l'une des quatre revendications précédentes,
**caractérisée en ce que**
la bande tubulaire peut être enroulée avec un dispositif d'enroulement (36).

15. Système (2, 40) pour la fabrication, le remplissage et la fermeture de sacs (27), comprenant au moins :
- un dispositif de déroulement (41) pour une bande plate (43) constituée d'un premier composant de matériau,
- un dispositif de formation de gaine (50) pour la formation d'une bande tubulaire (4), qui dispose d'un axe longitudinal, à partir de la bande plate (43),
- un dispositif de découpe transversale (16) pour la découpe de morceaux de gaine (18) à partir de la bande tubulaire (4),
- un dispositif de jointure transversale (13) pour la formation d'un cordon de fond d'un morceau de gaine (18),
- un dispositif de remplissage (23) pour le remplissage de morceaux de gaine (18) à travers l'ouverture restante,
- un autre dispositif de jointure transversale (26), avec lequel l'ouverture restante peut être fermée au moyen d'une jointure transversale (64),
**caractérisé par**
une machine de formation de gaine selon les revendications 10 à 14.

16. Sac (27), comprenant un premier composant de matériau, un axe longitudinal et au moins un cordon de fermeture, qui s'étend globalement transversalement par rapport à l'axe longitudinal et avec lequel le sac est fermé au niveau d'au moins une extrémité,
**caractérisé en ce que**
au moins un deuxième composant de matériau est prévu à l'intérieur du sac, l'au moins un deuxième composant de matériau variant dans le sens de l'axe longitudinal du sac (27) de façon à ce que la qualité du matériau de type gaine soit modifié dans le sens de l'axe longitudinal au moins à certains endroits de la largeur du sac (B), l'au moins un autre composant de matériau se présentant sous la forme de feuilles, ces feuilles étant fixées aux extrémités supérieure et inférieure du sac sur la surface interne.

17. Sac selon la revendication précédente,
**caractérisé en ce que**
le deuxième composant comprend au moins un morceau de matériau, plus particulièrement une feuille, sur laquelle est réalisée un cordon de fermeture.

18. Sac selon l'une des deux revendications précédentes,
**caractérisé en ce que**
l'au moins un morceau de matériau est fixé au premier composant de matériau avec une colle ou avec un extrudat.

19. Sac selon l'une des deux revendications précédentes,
**caractérisé en ce que**
seules des parties de l'au moins un morceau de matériau sont fixées au premier composant de matériau.

20. Sac selon la revendication précédente,
**caractérisé en ce que**
vu dans la direction longitudinale du sac, la fixation du morceau de matériau est disposée sur le premier composant et le cordon de fermeture est disposé à différents endroits.

21. Sac selon l'une des revendications 16 à 20,
**caractérisé en ce que**
le cordon de fermeture est un cordon de soudure.

22. Sac selon l'une des revendications 16 à 21,
**caractérisé en ce que**
le premier composant de matériau comprend du papier.

23. Sac selon l'une des revendications 16 à 21,
**caractérisé en ce que**
le premier composant de matériau comprend un film de matière plastique ou un tissu constitué de bandelettes de matière plastique.

24. Sac selon la revendication précédente,
**caractérisé en ce que**
l'au moins un autre composant de matériau comprend un film de matière plastique dont la température de soudure est inférieure à celle du premier composant de matériau.
